(19) Europäisches Patentamt
European Patent Office
Office européen des brevets

(11) **EP 4 641 284 A1**

(12) **EUROPEAN PATENT APPLICATION**

(43) Date of publication:
**29.10.2025 Bulletin 2025/44**

(21) Application number: **25157969.4**

(22) Date of filing: **14.02.2025**

(51) International Patent Classification (IPC):
**G02B 21/08** (2006.01)   **G02B 25/02** (2006.01)
**G02B 27/02** (2006.01)   **G03B 15/02** (2021.01)

(52) Cooperative Patent Classification (CPC):
**G03B 15/02; G02B 5/0278; G02B 13/24;**
**G02B 25/02; G02B 27/025;** G02B 15/14;
G02B 21/084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.04.2024 IT 202400009148**

(71) Applicant: **Microconsult Srl**
**50019 Sesto Fiorentino (FI) (IT)**

(72) Inventor: **VALLERIANI, Marco**
**50019 Sesto Fiorentino (FI) (IT)**

(74) Representative: **Fabbriciani, Simone**
**Bugnion S.p.A.**
**Viale Gramsci 42**
**50132 Firenze (IT)**

(54) **OPTICAL DEVICE AND LIGHT DIFFUSION METHOD**

(57)     Described is an optical device (1) for use in the macro-photography sector which comprises an optical zoom unit (2) which has a fixed section (3) and a movable section (4) movable in the direction of an optical axis (X) of the optical device (1) relative to the fixed section (3). The optical device (1) also comprises a lighting system in which a lighting ring (5) can be associated with a first end of the movable section (4). The lighting ring (5) is con-figured to generate a beam of light designed to strike a sample (C) to be observed. Also forming part of the optical device (1) are a first diffuser (7) connected to the movable section (4) and a second diffuser (8) integral with the fixed section (3) defining a cavity (9).

This invention also relates to a method for diffusing light made by means of the optical device (1).

Fig.1

EP 4 641 284 A1

## Description

This invention relates to an optical device and a method for diffusing light made using the optical device.

This invention is applied in the photography sector which extends from macro-photography to stereo-microscopy.

More generally speaking, the invention can be applied in the sectors in which it is essential to view, analyse and inspect samples, for example, in the electronic and semiconductor industries, in the goldsmith's sector, in naval and automotive mechanics but also in the cultural heritage sector when it is necessary to carry out checks on works of art for detecting layers of dust or damage to paintings.

According to the prior art and what is indicated in the prior art document JP 2006337422 A, the analysis of the morphology of the samples of various types often requires the optimisation of the lighting for a predetermined application. The optimised lighting for an application may be ineffective when the parts vary in terms of the geometry and/or the finish, therefore, it is necessary to optimise the lighting depending on the sample to be displayed.

Moreover, it is known that the acquisition of three-dimensional images characterised by a precise perception of the depth is made possible by using stereo-microscopes which perform the analysis of the sample not by transparency but by reflection.

In the analysis of minerals or, in general, of samples with reflective surface portions and in the quality control of metals and their alloys, the main drawback which occurs in the use of stereo-microscopes is due to the reflection of light striking the material; in effect, the reflection alters the trajectory of the light causing the loss of information about the surface characteristics of the sample, thus adversely affecting the entire analysis. Moreover, it is known that, for example, for biological microscopes the samples analysed must be adequately prepared to ensure that the details of interest are observed and further processing and preparation costs are therefore necessary.

Metallographic and mineralogical analyses are often conducted using macro-photography instruments. The primary advantage offered by the use of an instrument of this type is that good quality images are obtained by means of more compact devices and lower costs.

In fact, the rapid technological evolution in the sector has made macro-photography practicable also using instruments that are not necessarily professional since digital cameras are available on the market at a limited cost.

It is also known that by combining the macro technique with the use of spacer cables, which represent actual extensions positioned between the lens and the machine body, results in a moving away between the lens and the image sensor which leads to an increase in the enlargement ratio. Alternatively, it is possible to use dedicated lenses, the so-called macro lenses, which are optically correct relative to the standard lenses so as to exhibit a less pronounced focal profile aberration.

Macro-photography requires that the sample to be analysed must be in a condition of sufficient exposure to natural light or if this is not possible it is necessary to use a suitable external light source, such as a flash, thus making the acquisition and the subsequent processing of the image more laborious.

A solution of this type is optimum for opaque samples, that is to say, optically non-transparent, but not for samples characterised by reflective surfaces as often occurs in metallographic and mineralogical analyses. The purpose of this invention is to provide an optical device and a method for diffusing light which are able to overcome the drawbacks of the prior art.

An aim of this invention is to provide an optical device and a method for diffusing light which allow the sample to be analysed to be illuminated in a homogeneous manner, with an appropriate amplitude and an optimum intensity.

Another aim of this invention is to provide an optical device and a method for diffusing light configured in such a way as not to generate problems in terms of quality of the image acquired due to the reflection of the light.

A further aim of the invention is to provide an optical device and a relative method for diffusing light which has high performance levels, requires simplified maintenance and has a limited cost.

The technical purpose indicated and the specified aims are substantially achieved by an optical device and a method for diffusing light comprising the technical features described in one or more of the appended claims. The dependent claims correspond to possible embodiments of the invention.

In particular, the technical purpose and the aims indicated are achieved by an optical device which comprises an optical zoom unit which has a fixed section and a section movable in the direction of an optical axis of the optical device relative to the fixed section. The optical device also includes a lighting system comprising a lighting ring which can be associated, preferably in a stable fashion, to a first end of the movable section. The lighting ring generates a light beam configured in use to strike a sample to be observed.

The optical device according to this invention comprises a first diffuser connected to the movable section and which has a circular cross-section with a first and a second diameter connected to each other according to a predetermined connecting radius and wherein the lighting ring is interposed between the first diffuser and the movable section.

Moreover, there is a second diffuser integral with the fixed section, which has a variable circular cross-section, forming a cavity and which extends between a first section and a second section with different diameters, the diameters of the two sections advantageously have dimensional ratios which can be selected.

In particular, the ratio between the two diameters of the second diffuser is between 0.4 and 0.6, inclusive, preferably between 0.45 and 0.55, inclusive, more preferably between 0.47 and 0.53, inclusive, even more preferably between 0.48 and 0.51, inclusive.

Advantageously, the compliance with all the above-mentioned technical features allows light to be diffused in such a way as to allow an optimum vision of the sample being analysed.

Another aspect of the invention relates to a method for diffusing the light made using the optical device and having the steps of emitting light by means of the lighting system, diffusing light emitted by the lighting ring by means of the first diffuser in such a way as to diffuse the light beam in the cavity defined by the second diffuser and, lastly, conveying the light diffused by the second diffuser to a focal point in which the sample to be analysed is positioned.

This invention overcomes the drawbacks of the prior art by providing an optical device which makes it possible to detect the details of a sample avoiding the problem caused by the light reflected by the sample which prevents the details present on its surface from being detected.

An advantage of the invention is therefore to provide a method for diffusing the light which makes it possible to overcome the problems linked to the light reflected by the sample.

Further features and advantages of the invention are more apparent in the non-limiting description which follows of a non-limiting embodiment of an optical device and a method for diffusing the light comprising the above-mentioned optical device.

The description is set out below with reference to the accompanying drawings, which are provided solely for purposes of illustration without restricting the scope of the invention and in which:

Figure 1 shows a first cross-section view of the optical device according to this invention;

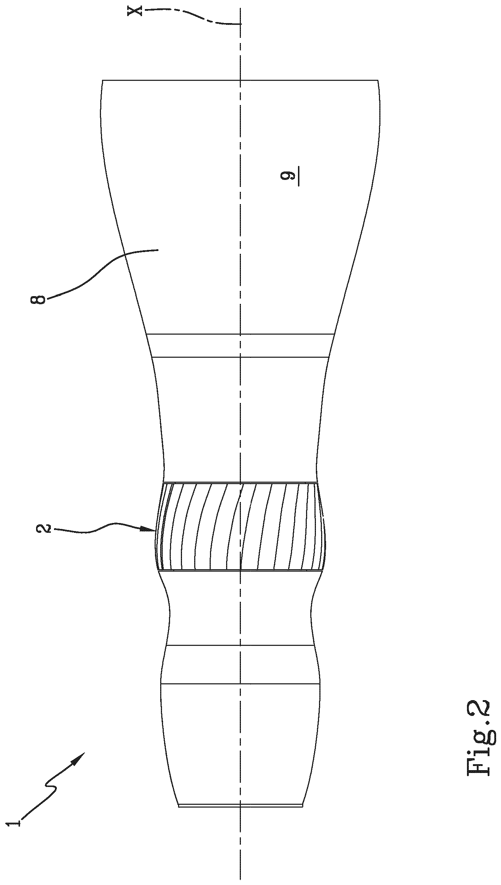

Figure 2 shows a schematic side view of the optical device according to the invention;
Figures 3, 4 and 5 show different schematic views of a first embodiment of a component of the optical device;
Figures 6, 7 and 8 show different schematic views of a second embodiment of a component of the optical device;
Figures 9, 10 show, respectively, embodiments of a further component of the optical device;
Figure 11 shows a second cross-section view of the optical device according to the invention.

With reference to the accompanying drawings, the optical device is denoted in its entirety by the numeral 1.

The optical device 1 for use in the sector of macro-photography comprises an optical zoom unit 2 which in turn comprises a fixed section 3 and a section 4 movable in the direction of an optical axis "X" of the optical device 1 relative to the fixed section 3.

In other words, the movable section 4 is movable relative to the fixed section 3.

In particular, the fixed section 3 is movable in the direction of the optical axis "X" of the optical device 1.

According to an embodiment, the fixed section 3 and the movable section 4 of the optical zoom unit 2 comprise one or more lenses with predetermined constructional features.

The optical device 1 also comprises a lighting system comprising a lighting ring 5 which can be stably associated with a first end of the movable section 4, the lighting ring 5 being configured to generate a light beam which, in use, is configured to strike a sample C to be observed.

The term "sample" C may mean any object or body belonging to various sectors such as, for example, the electronic and semiconductor industry, the goldsmith's sector, naval and automotive mechanics but also in the cultural heritage sector. Moreover, the term "sample C" may also mean surfaces of celestial bodies.

The optical device 1 comprises a first diffuser 7 connected to the movable section 4 and which has a circular cross-section having a first diameter 7a and a second diameter 7b connected to each other according to a predetermined connecting radius. In other words, the first diffuser 7 has a lateral wall extending between the first diameter 7a and the second diameter 7b and having a curvature defined by the above-mentioned connecting radius.

The lighting ring 5 is interposed between the first diffuser 7 and the movable section 4.

The first diffuser 7 has an axis coinciding with the optical axis "X" and extends in increasing cross-section starting from the movable section 4.

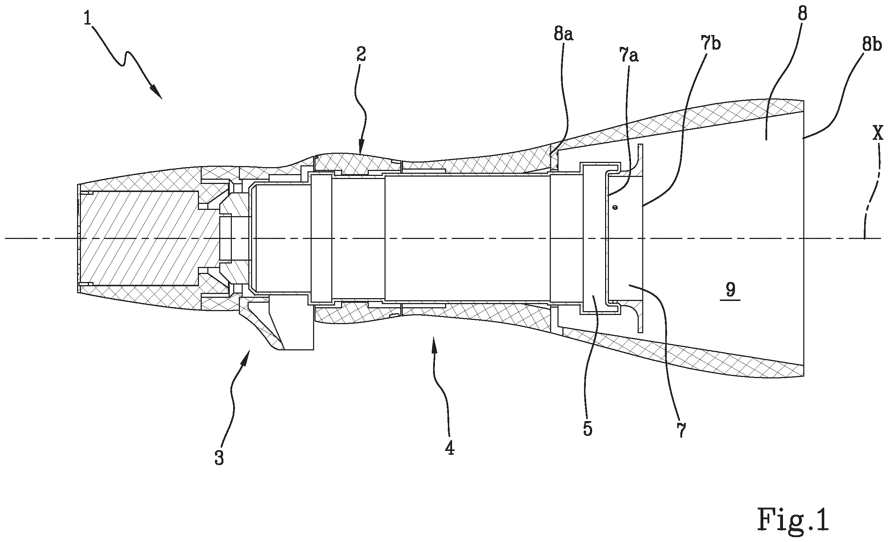

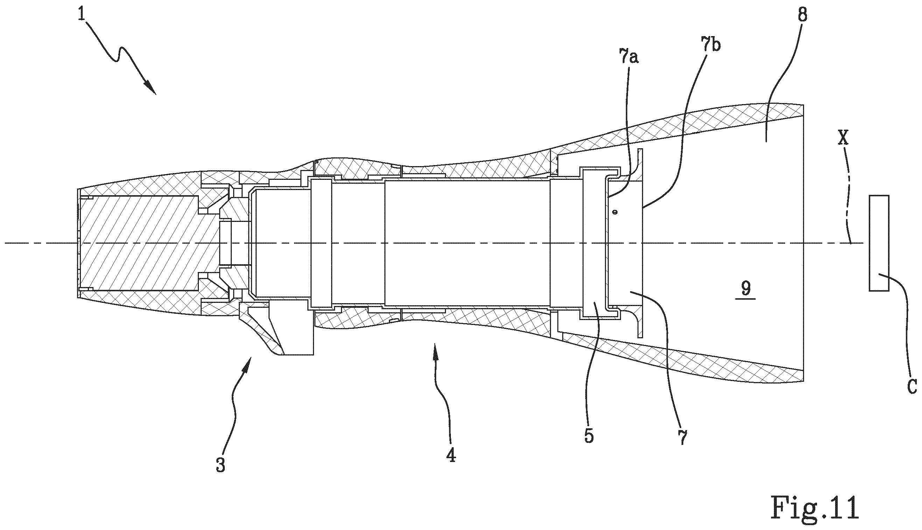

In other words, the first diffuser 7 according to an embodiment shown in Figures 1 and 11 is interposed between the lighting ring 5 and the sample C on which the light beam strikes. The lighting ring 5 comprises LED modules or, according to different embodiments of it, any similar light source.

For this reason, the light beam which reaches the sample C is at least inclined relative to the optical axis "X" since it has been at least diffused by the first diffuser 7.

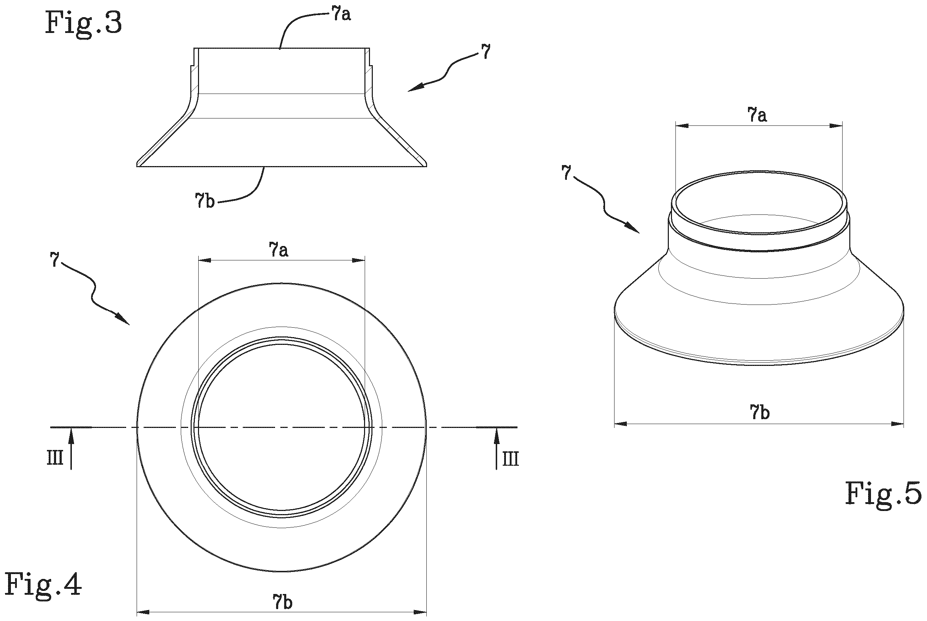

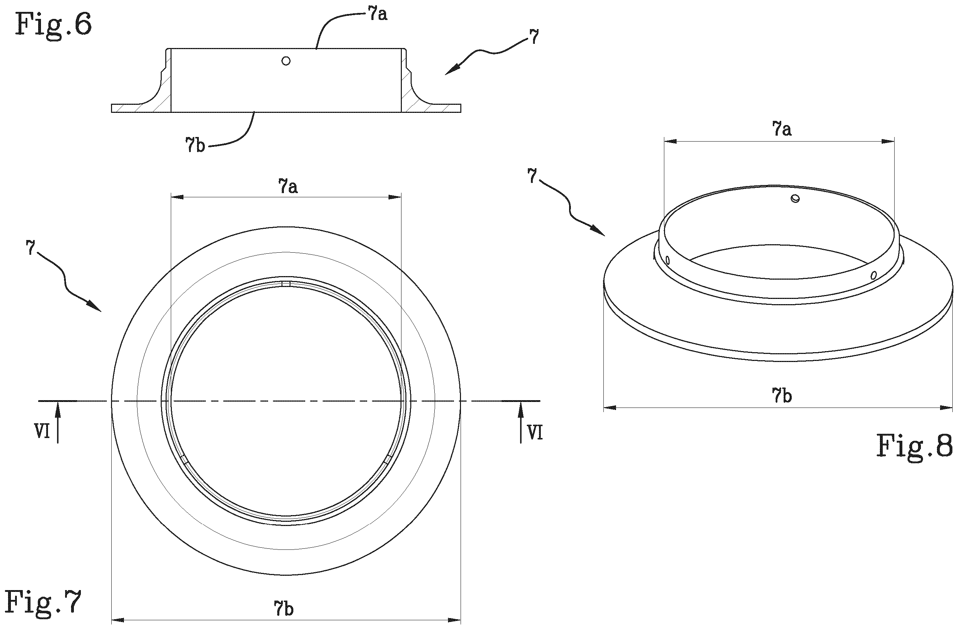

The first diffuser 7 has a first diameter 7a and a second diameter 7b wherein the first diameter 7a is that in contact with the lighting ring 5. The first diameter 7a and the second diameter 7b of the first diffuser 7 are connected according to a connecting radius of between 9 mm and 12 mm. Possible embodiments of the first diffuser 7 are shown in Figures 3 to 8, wherein the first diffuser 7 is shown in cross-section, Figures 3 and 6, in a top plan view, Figures 4 and 7 and in a perspective view, Figures 5 and 8. With reference to Figures 3, 4 and 5, the first diffuser 7 may have a first diameter 7a of approximately 60 mm and a second diameter 7b of approximately 100 mm and may have a connecting radius of 12 mm.

With reference to Figures 6, 7 and 8, the first diffuser 7 may have a first diameter 7a of approximately 90 mm and a second diameter 7b of approximately 130 mm and may have a connecting radius of 9 mm.

The first diffuser 7 is also associated with the end of the movable section 4 using coupling means which may be of any known type, for example, threaded or snap-on elements. In that way the first diffuser 7 is removable and can therefore be replaced with a similar diffuser with a different shape or materials.

Moreover, the movable diffuser 7 moves as one with the movable section 4 in such a way as to move towards or away from the sample C in such a way that the diffusion of the light on the sample C is always optimum.

The optical device 1 also comprises a second diffuser 8 integral with the fixed section 3, having a variable circular cross-section, defining a cavity 9 and extending between a first section and a second section having upper diameter 8a and lower diameter 8b having dimensional ratios which can be selected.

The ratio "R" between the diameters 8a and 8b of the second diffuser 8 is:

$$R = 8a/8b$$

In order to optimise the diffusion of the light which strikes the sample C, R is approximately equal to 0.5; this means that the diameter 8b is approximately twice the diameter 8a.

The first section of the second diffuser 8, therefore the one close to the diameter 8a, is associated with the fixed section 3 and the diameter of this first section has an extension greater than the diameter of the lighting ring 5.

In other words, the upper diameter 8a of the second diffuser 8 is greater than the diameter of the lighting ring, since the latter is contained in the cavity 9 defined by the second diffuser 8.

The optical device 1 is characterised in that the second diffuser 8 has a substantially frustoconical shape.

In other words, according to a possible embodiment shown in Figure 1 the second diffuser 8 has a truncated cone shape, so the upper diameter 8a is less than the lower diameter 8b of the support.

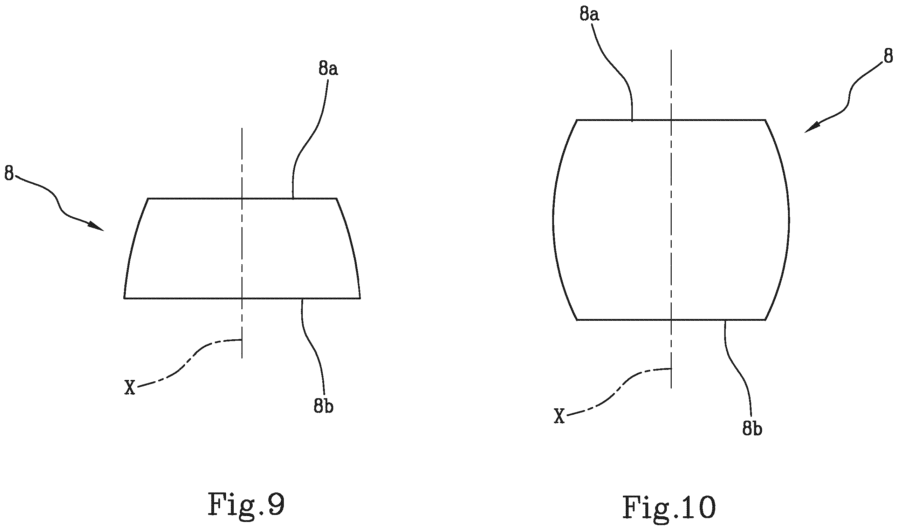

Alternatively, the view shown in Figure 9 shows the second diffuser 8 having a cross-section of a spherical cap also having, therefore, an upper diameter 8a less than the lower diameter 8b.

According to the representation shown in Figure 10 the second diffuser 8 has, for example, a spherical segment section with two bases. This means that the upper diameter 8a and the lower diameter 8b are equal.

The lighting ring 5 and the first diffuser 7 are positioned inside the cavity 9 defined by the second diffuser 8 which extends in length in the direction of the optical axis "X".

The length of the cavity 9 covers an overall stroke of the lighting ring 5 and of the first diffuser 7, since the latter is associated with the movable section 4 of the optical device 1.

In other words, the second diffuser 8 extends for a length in the direction of the optical axis "X" sufficient to contain inside the cavity 9 generated by it at least the first diffuser 7 in all the positions which it may adopt following the movement of the zoom of the movable section 4.

In effect, according to an embodiment shown in Figure 11 the reciprocal position of the two diffusers 7 and 8 ensures that the light beam is not sent to the sample C subjected to analysis in a direct manner but that the light beam is first diffused and inclined.

Moreover, the lighting system is connected to a control unit for controlling and adjusting the intensity emitted by the lighting ring 5.

In other words, the inclination of the light beam and the geometry of the corresponding light section are determined by the reciprocal position of the first diffuser 7 and the second diffuser 8.

According to an embodiment, the inner and outer walls of the first diffuser 7 and of the second diffuser 8 are opaque. In other words, they are white surfaces not in the form of a mirror suitable for diffusing striking light. In effect, the light beam emitted by the lighting ring 5 is diffused by the first diffuser 7 on the inner walls of the second diffuser 8, which conveys the diffused light towards the sample C.

The optical device 1 also uses specially developed software which allows the data to be acquired and stored.

This invention also comprises providing a method for diffusing the light made using the optical device 1 according to this invention.

The method claimed comprises the steps of emitting the light by means of the lighting system and in particular by means of the lighting ring 5, diffusing the light emitted by the lighting ring 5 by means of the first diffuser 7 in such a way as to diffuse the light beam in the cavity 9 defined by the second diffuser 8 and lastly conveying the diffused light by means of the second diffuser 8 to a focal point in which the sample C to be analysed is positioned.

Advantageously, the optical device 1 according to this invention and the method comprising the optical device 1 allow a lighting section to be generated on the sample C which is homogeneous and of suitable amplitude and intensity, avoiding the problem of reflected light which would prevent any characterising details of the sample C from being detected.

In other words, the arrangement of the elements constituting the optical device 1 ensures that the light beam is not sent to the sample C subjected to analysis in a direct manner but that the light beam is first diffused and then suitably conveyed to the focal point.

Thanks to the diffusion method according to this invention it is possible to guarantee uniform and diffused illumination of the sample, without the generation of shadow zones or excessive illumination caused by reflection phenomena.

For this reason, this invention represents an optimum solution for the execution of samples which are not uniformly opaque or with reflective portions.

Moreover, advantageously, the optical device 1 according to this invention combines high resolution information given by the quality of the optical system and the lighting system, with structural simplicity which makes possible the use also by non-specialised personnel.

In addition, this constructional simplicity is closely correlated to not particularly laborious maintenance and with lower production and maintenance costs with respect to those available on the market. Reference has been made above to preferred embodiments; therefore, it is possible to make modifications relative to the materials used as well as to the type of light source as clarified by the following dependent claims.

**Claims**

1. An optical device (1), particularly for macro-photography, comprising:

   a zoom optical unit (2) having a fixed section (3) and a section (4) movable in the direction of an optical axis (X) of the optical device (1) relative to the fixed section (3);
   a lighting ring (5) which can be associated with a first end of the movable section (4) and configured to generate a beam of light designed to strike a sample (C) to be observed;
   a first diffuser (7) connected to the movable section (4) and having a circular section having a first diameter (7a) and a second diameter (7b) which are connected to each other according to a predetermined connecting radius;
   the lighting ring (5) being interposed between the first diffuser and the movable section (4);
   a second diffuser (8) integral with the fixed section (3), having a variable circular section defining a cavity (9) and extending between a first section and a second section of respective diameters (8a, 8b).

2. The optical device (1) according to claim 1, wherein the first diameter (7a) and the second diameter (7b) of the first diffuser (7) are connected according to a connecting radius of between 7 and 14 mm, inclusive, preferably between 8 and 13 mm, inclusive, more preferably between 8.5 and 12.5 mm, inclusive, even more preferably between 9 and 12 mm, inclusive.

3. The optical device (1) according to claim 2, wherein the second diffuser (8) has a substantially frustoconical shape with the relative diameters (8a, 8b) having dimensional ratios which can be selected.

4. The optical device (1) according to claim 3, wherein the ratio "R" between the diameters (8a, 8b) of the second diffuser (8), that is, R=8a/8b, is between 0.4 and 0.6, inclusive, preferably between 0.45 and 0.55, inclusive, more preferably between 0.47 and 0.53, inclusive, even more preferably between 0.48 and 0.51, inclusive.

5. The optical device (1) according to claim 4, wherein the second diffuser (8) has a spherical segment shape with two bases.

6. The optical device (1) according to any one of claims 1 to 5, wherein the lighting ring (5) and the first diffuser (7) are positioned inside the cavity (9) defined by the second diffuser (8); the cavity (9) extending in length along the direction of the optical axis (X), with a size such as to cover an overall stroke of the lighting ring (5) and the first diffuser (7).

7. The optical device (1) according to any one of claims 1 to 6, wherein the first section of the second diffuser (8) is associated with the fixed section (3) and wherein a diameter of the first section has an extension greater than a diameter of the lighting ring (5).

8. The optical device (1) according to any one of claims 1 to 7, wherein the first diffuser (7) and the second diffuser (8) comprise opaque inner and outer walls.

9. A method for diffusing light made using the optical device (1) according to any one of claims 1 to 8, and having the steps of:

   - emitting light using the lighting system;
   - diffusing light emitted by the lighting ring (5) using the first diffuser (7) in such a way as to diffuse the light beam in the cavity (9) defined by the second diffuser (8);
   - conveying the light diffused by the second diffuser (8) to a focal point in which the sample (C) to be analysed is positioned.

Fig.1

Fig.2

Fig.3

Fig.4

Fig.5

Fig.6

Fig.7

Fig.8

EP 4 641 284 A1

Fig.10

Fig.9

10

Fig.11

Europäisches
Patentamt

European
Patent Office

Office européen
des brevets

## EUROPEAN SEARCH REPORT

**Application Number**

EP 25 15 7969

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 050 412 A1 (MICROCONSULT SRL [IT]) 31 August 2022 (2022-08-31) * paragraphs [0025], [0029], [0031] - [0034]; claims 1, 5; figure 1 * | 1-9 | INV. G02B21/08 G02B25/02 G02B27/02 G03B15/02 |
| A | US 2014/185136 A1 (WOUTERS CHRISTOPHE [BE] ET AL) 3 July 2014 (2014-07-03) * the whole document * | 1-9 | |
| A | US 10 901 134 B2 (TOSHIBA KK [JP]) 26 January 2021 (2021-01-26) * the whole document * | 1-9 | |
| A | US 2014/132793 A1 (CHANG TZYY-SHUH [US] ET AL) 15 May 2014 (2014-05-15) * the whole document * | 1-9 | |

|  |  |
|---|---|
|  | TECHNICAL FIELDS SEARCHED (IPC) |
|  | G02B G03B |

The present search report has been drawn up for all claims

| Place of search | Date of completion of the search | Examiner |
|---|---|---|
| Munich | 27 June 2025 | Toccafondo, Iacopo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7969

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2025

| Patent document cited in search report | | Publication date | Patent family member(s) | | Publication date |
|---|---|---|---|---|---|
| EP 4050412 | A1 | 31-08-2022 | NONE | | |
| US 2014185136 | A1 | 03-07-2014 | TW | 201415077 A | 16-04-2014 |
| | | | US | 2014185136 A1 | 03-07-2014 |
| | | | WO | 2014036120 A1 | 06-03-2014 |
| US 10901134 | B2 | 26-01-2021 | JP | 6976914 B2 | 08-12-2021 |
| | | | JP | 2020046232 A | 26-03-2020 |
| | | | US | 2020088933 A1 | 19-03-2020 |
| US 2014132793 | A1 | 15-05-2014 | CN | 103826096 A | 28-05-2014 |
| | | | US | 2014132793 A1 | 15-05-2014 |
| | | | US | 2016154292 A1 | 02-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006337422 A